# FASCICULE DE BREVET EUROPEEN

(11) **EP 1 926 170 B1**
(45) Date de publication et mention de la délivrance du brevet: **23.03.2011**
(21) Numéro de dépôt: 07301505.9
(22) Date de dépôt: 29.10.2007
(51) Int. Cl.: H01M 8/10, H01M 8/00

(54) **Matériau d'électrolyte silicié pour pile à combustible, procédé pour sa réalisation et pile à combustible mettant en oeuvre un tel matériau**
Kieselsäurehaltiges Elektrolytmaterial für Brennstoffzellen, Verfahren zu dessen Herstellung und Brennstoffzelle, bei der ein derartiges Material zum Einsatz kommt
Silicon electrolyte material for a fuel cell, manufacturing method and fuel cell implementing such a material

(30) Priorité: 13.11.2006 FR 0654858
(43) Date de publication de la demande: 28.05.2008
(73) Titulaire: Commissariat à l'Énergie Atomique et aux Énergies Alternatives, 75015 Paris (FR)
(72) Inventeur: Martin, Steve, 38160 St Sauveur (FR); Plissonnier, Marc, 38320 Eybens (FR); Faucherand, Pascal, 38360 Sassenage (FR); Jodin, Lucie, 54000 Nancy (FR)
(74) Mandataire: Vuillermoz, Bruno

(56) Documents cités:
- EP-A- 1 455 230
- EP-A1- 1 020 489
- WO-A-2006/005887
- US-A- 4 533 369
- US-A1- 2005 113 547

## Description

### DOMAINE DE L'INVENTION

La présente invention concerne un matériau destiné à constituer l'électrolyte d'une pile à combustible. Ce matériau présente une matrice comprenant du carbone (C), du fluor (F), de l'oxygène (O) et de l'hydrogène (H), et du silicium (Si).

Le matériau objet de la présente invention permet d'améliorer les performances de l'électrolyte qu'il compose et, partant, de la pile à combustible qui intègre un tel électrolyte.

### ETAT ANTERIEUR DE LA TECHNIQUE

L'une des applications actuellement recherchée des piles à combustibles consiste à alimenter un appareil électronique portable, tel qu'un ordinateur ou un téléphone cellulaire. Ces applications sont souvent qualifiées de « nomades » car l'appareil avec sa pile à combustible doit être transportable. Il apparaît donc important de réduire les dimensions et la masse d'une telle pile, en conservant voire en améliorant ses performances électriques. Pour concilier la réduction de ses dimensions avec l'augmentation de ses performances électriques, on cherche actuellement à augmenter sensiblement la surface « active » ou réelle des composés actifs de cette pile à combustible, dont celle des membranes électrolytiques.

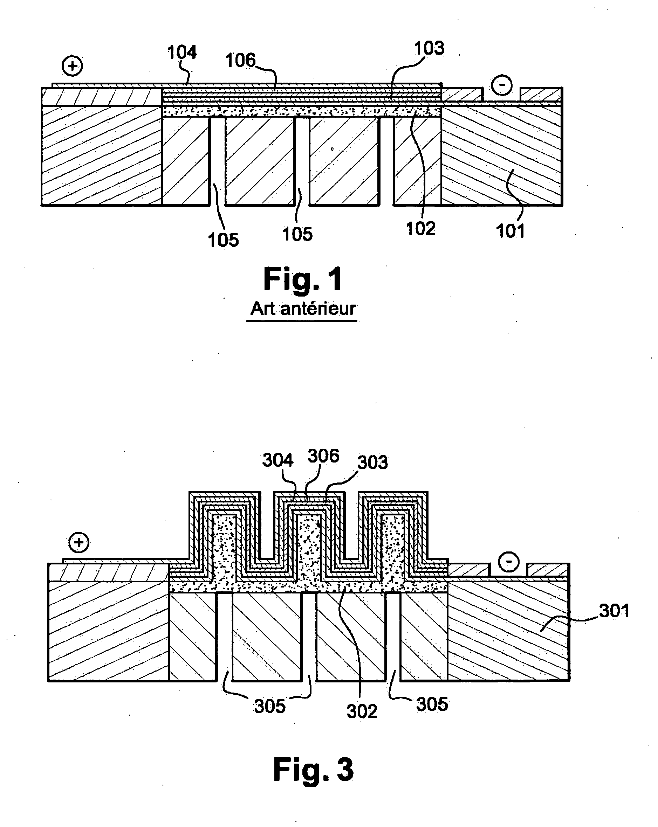

La figure 1 illustre une pile à combustible de l'art antérieur vue en section. De manière connue, une telle pile à combustible comprend un substrat en céramique **101,** épais de plusieurs centaines de micromètres, sur lequel est déposée une couche en céramique poreuse **102.** La couche en céramique **102** est poreuse au dihydrogène (H₂) gazeux amené par des canaux d'approvisionnement **105** à l'interface entre une cathode **103** planaire et l'anode **104** planaire correspondante.

Ce type de piles à combustible est qualifié de pile à membrane échangeuse de protons (de l'expression anglo-saxonne « *Proton Exchange Membrane Fuel Cell* »), car il comporte une membrane formant l'électrolyte **106** réalisé en un matériau bon conducteur protonique.

Pour favoriser les demi-réactions d'oxydation et de réduction se produisant dans la pile, il est en effet nécessaire que cet électrolyte présente une conduction des protons (H⁺) élevée.

Comme le montre la figure **1****,** les électrodes **103** et **104** ainsi que l'électrolyte **106** présentent une forme sensiblement plane. Or la superficie de l'interface entre les électrodes et l'électrolyte détermine directement les quantités de réactifs mis en oeuvre, et donc la puissance électrique fournie par la pile. C'est pourquoi on cherche à augmenter la superficie de cette interface entre les électrodes et l'électrolyte conducteur protonique.

Cependant, compte tenu de la nécessaire limitation de l'encombrement de la pile, les reliefs ou rugosités que l'on cherche à former à l'interface entre les électrodes imposent une grande précision dans le dépôt de l'électrolyte, afin de former des dépôts conformes, c'est-à-dire suivant la topographie du support en céramique poreuse. De tels dépôts conformes permettent en effet de conserver la géométrie des reliefs développés sur le support. Cela assure ainsi la continuité électrique des électrodes et de l'électrolyte membranaire.

Par ailleurs, la membrane électrolytique doit présenter une conduction protonique élevée, tout en résistant, chimiquement et mécaniquement à l'eau et aux solvants employés lors de la fabrication de la pile à combustible.

Parmi les matériaux de l'art antérieur susceptibles de constituer un électrolyte, on peut citer le Nafion® (par exemple décrit dans le brevet US 3 692 569), nom commercial désignant un polymère carbofluoré, c'est-à-dire une structure organique où les atomes d'hydrogène associes aux atomes de carbone ont été remplacés par des atomes de fluor. Plus précisément, le Nafion® est constitué d'un polymère formé par des chaînes fluorées flexibles sur lesquelles sont implantés de façon statistique des groupements acides. Le Nafion® forme une membrane sulfonée, comme cela ressort par exemple de la demande de brevet US 3 692 569.

En principe, une membrane électrolytique échangeuse de protons comporte une matrice hydrophobe et des zones hydrophiles réparties de façon discrète sur cette matrice. Dans la mesure où cette matrice forme une sorte d'ossature pour la membrane, elle est parfois dénommée squelette.

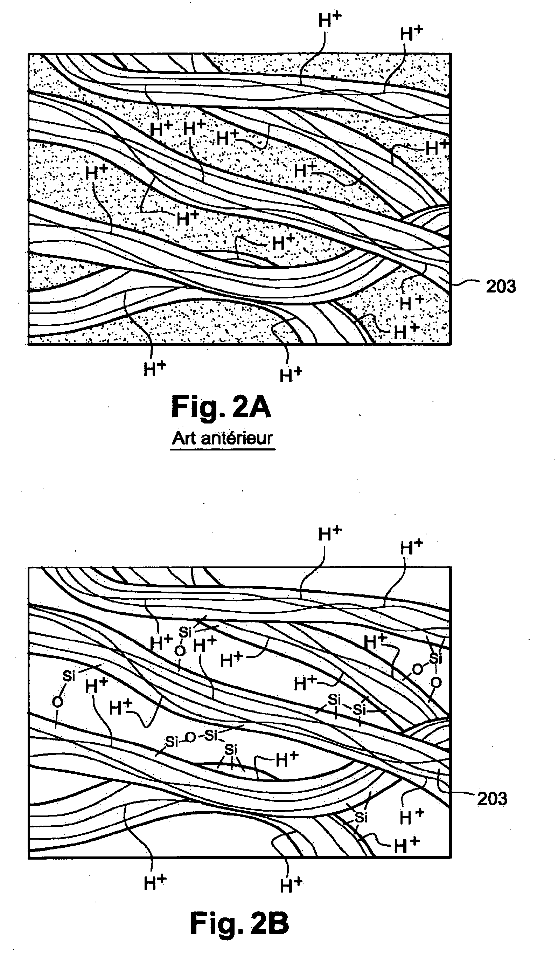

Cette matrice ou squelette est composée de régions amorphes et de régions cristallines présentant un caractère hydrophobe. L'hydrophobicité de cette matrice lui est conféré par le squelette carbo-fluoré formant l'ossature de la membrane. Les zones hydrophiles sont quant à elles de nature acide, c'est-à-dire comportent une ou plusieurs fonctions(s) acide. En général, comme le montre la figure 2A, les fonctions acide sont de type S0₃H.

Lors du fonctionnement de la pile, compte tenu de l'hydrophobicité de la matrice, les molécules d'eau mises en contact avec la membrane électrolytique se concentrent dans les zones hydrophiles à proximité des groupements acides de cet électrolyte. Ainsi, les molécules d'eau peuvent dissocier ces groupements acides, c'est à dire en détacher les protons, lesquels peuvent alors circuler librement dans l'électrolyte membranaire. Le Nafion® constitue ainsi un électrolyte présentant une bonne conductivité protonique, c'est-à-dire une conductivité supérieure à 10 mS/cm.

Cependant, le Nafion® est déposé par voie liquide, si bien qu'il s'étale entièrement sur le substrat et qu'il en recouvre tout relief ou rugosité. On aboutit ainsi à un dépôt dit « non conforme », car l'électrolyte ne reproduit pas les reliefs du support sous-jacent, ce qui limite la surface active d'échange, et donc la puissance électrique de la pile à combustible.

En outre, le procédé de dépôt de l'électrolyte Nafion® actuellement mis en oeuvre impose le dépôt d'une épaisseur minimale de Nafion® de quelques dizaines de micromètres. Par conséquent, une telle épaisseur minimale est incompatible avec la réalisation d'une membrane présentant une grande superficie, c'est-à-dire de nombreux reliefs.

Par ailleurs, le Nafion® est relativement sensible à l'eau et aux solvants mis en oeuvre au cours de la fabrication de la pile à combustible. Cette faible résistance chimique nécessite des précautions particulières pour éviter que les groupements acides de ce matériau ne soient prématurément dissous lors de la fabrication de la pile, donc avant son utilisation.

D'autres matériaux ont été mis en oeuvre pour réaliser un électrolyte pour pile à combustible apte à conduire les protons. Ainsi, l'article intitulé « New Ultra-Thin Fluorinated Cation Exchange Film Prepared by Plasma Polymerization » Z. OGUMI, Y. UCHIMOTO, Z. TAKEHARA et extrait du Journal de la Société d'Eléctrochimie n°137 (1990), pp.3319-3320, décrit un matériau électrolytique permettant de réaliser une membrane relativement fine d'environ 1 µm d'épaisseur (p.3320). Toutefois, ce matériau électrolytique s'est avéré piètre conducteur protonique, puisqu'il présente une conductivité de 0,01 mS/cm.

Le document US 2005/113547 décrit un polymère comprenant du carbone, du fluor, de l'oxygène, de l'hydrogène et du silicium, pouvant servir de membrane dans une pile à combustible et obtenu par copolymérisation.

Le document US 4,533,369 décrit une membrane de polytétrafluoroéthylène imprégnée de diméthylsiloxane puis soumise au plasma, présentant une perméabilité au gaz. Le silicone réticulé se trouve sous la forme d'une fine couche déposée sur une face de la membrane qui, par ailleurs, n'est pas destinée à une pile à combustible.

Le document EP 1 455 230 A2 décrit l'obtention par copolymérisation de films polymériques à base de carbone, de fluor, d'oxygène, d'hydrogène et de silicium. Ces polymères sont utilisés dans des compositions photosensibles mais pas dans le contexte des piles à combustible.

Le document EP 1 020 489 A1 décrit des membranes pour piles à combustible recouvertes, par polymérisation par plasma, d'une couche mince d'un polymère réticulé qui est riche en fonctions acide.

L'objet de la présente invention concerne donc un matériau électrolytique qui soit bon conducteur protonique, et qui ne soit pas trop sensible au procédé de fabrication de la pile. L'objet de l'invention concerne aussi un procédé de fabrication d'un tel matériau dont la vitesse de dépôt ne soit pas trop limitée.

### EXPOSE DE L'INVENTION

La présente invention se rapporte donc à un matériau électrolytique dont la conductivité protonique est élevée et typiquement supérieure à 10 mS/cm, dont la vitesse de dépôt est grande, c'est-à-dire supérieure à 2 µm/h, et qui résiste à l'eau et aux solvants mis en oeuvre au cours de la fabrication de la pile. De plus, le matériau électrolytique objet de la présente invention permet de réaliser des dépôts très fins conformes au relief sous-jacent.

Le matériau objet de l'invention est destiné à former un électrolyte de pile à combustible. Ce matériau présente une matrice hydrophobe comprenant du carbone, du fluor, de l'oxygène et de l'hydrogène. Selon l'invention, cette matrice comprend en outre du silicium.

Selon l'invention, cet électrolyte présente un rapport du pourcentage atomique en silicium sur la somme des pourcentages atomiques en carbone et en fluor compris entre 10⁻³ et 10⁻¹, de préférence entre 5.10⁻³ et 5.10⁻² ou entre 10⁻³ et 10⁻².

Selon les règles de l'art, l'incorporation de silicium est fortement déconseillée. Ainsi, l'incorporation de silicium réduirait, d'une part l'hydrophobicité de la matrice, et augmenterait d'autre part, son taux de réticulation, limitant ainsi la capacité d'un tel électrolyte à absorber de l'eau. Ainsi, on s'attendrait plutôt à une diminution de la conductivité protonique et à une dégradation de ses résistances chimique et surtout mécanique.

Pourtant, de manière surprenante, un tel matériau électrolytique incorporant du silicium permet d'obtenir des membranes de piles à combustible présentant des résistances chimique et mécanique supérieures, une conductivité protonique élevée, une aptitude à un dépôt fin, conforme et rapide, c'est-à-dire à cadence de production relativement élevée.

En outre, une telle proportion de silicium dans la matrice permet de constituer un matériau formant un électrolyte performant en termes de conductivité protonique, de finesse de dépôt, de conformité aux reliefs, de résistances mécanique et chimique, et de cadence de production.

En pratique, les atomes de silicium peuvent former des ponts au sein de la matrice, ces ponts appartenant au groupe comprenant les groupements silicium-silicium (-Si-Si-), silicium-oxygène-silicium (-Si-O-Si-), silicium-oxygène-carbone (-Si-O-C-), et silicium-carbone (-Si-C-).

En d'autres termes, les atomes de silicium forment des liaisons dans la matrice, de manière isolée ou combiné avec des atomes d'oxygène et/ou de carbone.

Avantageusement, la matrice peut être fonctionnalisée par des groupements acides.

Un tel matériau est donc susceptible, lorsqu'il est mis en présence d'eau au cours du fonctionnement de la pile à combustible, de libérer et de conduire les protons (H⁺) provenant de ces groupements acides.

De manière pratique, ces groupements acides peuvent être choisis parmi les groupements sulfonique (-SO₂OH), carboxylique (-COOH) et phosphonique (-PO(OH)₂).

De tels groupements acides peuvent être implantés sur la matrice du matériau au moyen de procédés éprouvés. De plus, de tels groupements acides sont aptes à libérer leurs protons dès lors qu'ils sont mis en présence d'eau à température ambiante.

En pratique, le matériau de l'invention peut présenter une structure choisie dans le groupe comprenant les verres organiques, les cristaux, les polymères, les verres et les céramiques.

En d'autres termes, la présente invention permet de réaliser des matériaux électrolytiques possédant diverses structures moléculaires. La structure moléculaire peut alors être choisie selon l'application recherchée.

Par ailleurs, la présente invention concerne un procédé de fabrication d'un matériau destiné à former un électrolyte pour pile à combustible, le matériau présentant une matrice comprenant du carbone, du fluor, de l'oxygène et de l'hydrogène. Selon l'invention, ce procédé comprend les étapes consistant :
- à introduire un précurseur gazeux composé de silicium dans une enceinte de dépôt chimique en phase vapeur assisté par plasma ;
- à introduire dans l'enceinte un précurseur carbofluoré, tel que par exemple de l'octafluorobutène (C₄F₈) ou du C₂F₄ ;
- à introduire dans l'enceinte un gaz porteur, et par exemple de l'hélium (He) ;
- à introduire dans l'enceinte de la vapeur d'eau (H₂O) ;
- à générer un plasma dans l'enceinte.

En pratique, le précurseur gazeux mis en oeuvre est choisi dans le groupe comprenant les composés organosilicés hémaméthyldisiloxane (HMDSO), le tétraéthyl-orthosilicate (TEOS), l'octaméthylcyclotétrasiloxane (OMCTSO), le tétraméthylsilane (TMS), ainsi que le composé inorganique tétrahydrure de silicium (SiH₄). Un tel précurseur silicé permet d'adjoindre des atomes de silicium dans la matrice du matériau objet de l'invention.

Selon une forme de réalisation du procédé objet de l'invention :
- le débit de précurseur gazeux peut être compris entre 1 cm³/s et 1000 cm³/s ;
- le débit du précurseur carbofluoré peut être compris entre 1 cm³/s et 1000 cm³/s ;
- le débit du gaz porteur peut être compris entre 1 cm³/s et 500 cm³/s ;
- le débit de vapeur d'eau peut être compris entre 1 cm³/s et 1000 cm³/s ;
- l'enceinte peut être placée sous une pression comprise entre 0,1 mbar et 5 mbar ;
- le plasma peut être excité par des décharges capacitives dont la puissance est comprise entre 5 W et 500 W.

De telles quantités de réactifs et de tels paramètres de plasma permettent de déposer un matériau conforme à la présente invention et, en particulier comprenant une proportion de silicium caractéristique de l'invention.

D'autre part, l'invention concerne un pile à combustible comportant un empilement comprenant un support en céramique poreuse à l'hydrogène, un film formant collecteur anodique, totalement ou partiellement recouvert par une membrane électrolytique réalisée en un matériau tel que précédemment exposé, ainsi qu'un film formant collecteur cathodique.

Une telle pile à combustible présente donc des performances électriques améliorées pour un encombrement semblable.

En pratique, la membrane électrolytique de cette pile peut posséder une épaisseur comprise entre 1 nm et 10 µm.

Selon une forme de réalisation avantageuse de l'invention, le support peut présenter de nombreuses rugosités et la membrane électrolytique est conforme à ces rugosités.

Par conforme, on désigne un dépôt dont la forme reproduit fidèlement le relief du support sous-jacent. En d'autres termes, il s'agit d'un dépôt possédant une épaisseur sensiblement constante. Ainsi, le matériau objet de la présente invention permet de réaliser des piles à combustible dont les membranes électrolytiques sont fines et conformes au relief du substrat. De telles piles présentent donc une surface active maximisée.

En pratique, le rapport de la surface réelle de la membrane électrolytique sur la surface projetée de la membrane sur un plan est supérieur à 2, et préférentiellement supérieur à 5.

Une telle pile à combustible présente donc une surface active importante apte à favoriser les échanges entre anode et cathode. Cette pile à combustible présente donc une compacité élevée.

Avantageusement, la conductivité protonique de cet électrolyte est comprise entre 10 mS/cm et 500 mS/cm.

Une pile à combustible présentant une telle conductivité protonique possède donc une puissance électrique améliorée.

### BREVE DESCRIPTION DES FIGURES

La manière dont l'invention peut être réalisée et les avantages qui en découlent ressortiront aussi des exemples de réalisation qui suivent, donnés à titre indicatif et non limitatif, à l'appui des figures annexées parmi lesquelles :
La figure 1 est une représentation schématique en section d'une pile à combustible de l'art antérieur. Cette figure a déjà été décrite en relation avec l'état antérieur de la technique.
La figure 2A est une représentation schématique d'un matériau électrolytique de l'art antérieur. Cette figure a déjà été décrite en relation avec l'état antérieur de la technique. La figure 2B est une représentation schématique d'un matériau électrolytique conforme à la présente invention.
La figure 3 est une représentation schématique en section d'une pile à combustible conforme à la présente invention.
La figure 4 est un diagramme obtenu par spectroscopie infrarouge et illustrant certaines caractéristiques structurelles du matériau objet de l'invention.
La figure 5 est un diagramme obtenu par spectroscopie d'impédance illustrant les conductivités protoniques de trois matériaux conformes à la présente invention.

### MODES DE REALISATION DE L'INVENTION

La figure 2B illustre, à l'échelle de 3 µm, la structure du matériau objet de la présente invention. Conformément à l'invention, ce matériau présente une matrice **203** comprenant du carbone (C), du fluor (F), de l'oxygène (O) et de l'hydrogène (H). Comme exposé précédemment, cette matrice forme l'ossature d'une membrane électrolytique et elle est donc également dénommée squelette.

Comme le montre la figure 2B, cette matrice comprend en outre du silicium (Si), présent sous la forme de ponts ou pontages constitués par des groupements silicium-silicium (-Si-Si-), silicium-oxygène-silicium (-Si-O-Si-) et/ou silicium-oxygène-carbone (-Si-O-C-), et/ou silicium-carbone (-Si-C-). Ces ponts forment par définition des liaisons dans la matrice et notamment entre les différentes fibres, illustrées par la figure 2B, constituant cette matrice.

Dans l'exemple de la figure 2B, les atomes de silicium représentent 1% de la somme des nombre d'atomes de carbone et de fluor présents dans la matrice **203.** Ainsi, le rapport du pourcentage atomique de silicium contenu dans la matrice **203** sur la somme des pourcentages atomiques en carbone et en fluor est de 0,01, soit 1.10⁻².

Par ailleurs, comme le montre encore la figure 2B, la matrice **203** possède des groupements acides symbolisés par les protons H⁺ liés à la matrice **203.** Conformément à l'invention, ces groupements acides susceptibles de libérer ces protons sont choisis parmi les groupements sulfonique (-SO₂OH), carboxylique (-COOH) et phosphonique (-PO(OH)₂).

Ainsi, lorsque la membrane électrolytique constituée d'un matériau conforme à l'invention est mise en contact avec de l'eau, ses groupements acides sont aptes à libérer des protons, ce qui détermine la conductivité protonique de la membrane et, partant, les performances électriques de la pile à combustible.

La figure 3 illustre une pile à combustible conforme à l'invention, dont l'électrolyte est constitué du matériau objet de l'invention.

A l'instar des piles à combustible de l'art antérieur, cette pile à combustible comprend un empilement disposé sur un substrat en céramique **301** possédant une épaisseur de plusieurs centaines de micromètres, en l'occurrence 600 µm Cet empilement comprend un support en céramique poreuse à l'hydrogène **302** recouvert par un film **303** formant le collecteur anodique, dont le pôle est noté « + ». L'hydrogène est amené par l'intermédiaire de canaux **305** ménagés dans le substrat en céramique **301.**

Le support peut être, de façon générale, un support rigide (par exemple un substrat silicium) ou non (par exemple, un film en PET : polyéthylèneterephtalate).

Ce collecteur anodique est relié au pôle « + » de la pile et il est recouvert totalement par une membrane électrolytique **306** réalisée en un matériau conforme à l'invention. De plus, tout comme la pile de l'art antérieur illustré par la figure 1, la membrane électrolytique **306** est recouverte par un film formant le collecteur cathodique, dont le pôle est noté « - ».

Comme le montre la comparaison entre les figures 1 et 3, à la différence de la pile à combustible de l'art antérieur illustré par la figure 1, la pile à combustible objet de l'invention présente un certain nombre de rugosités, en l'occurrence trois plots situés dans le plan de section. Ces rugosités forment autant de reliefs destinés à augmenter la surface réelle active de la membrane électrolytique et donc à améliorer les performances électriques de la pile sans augmenter son encombrement global.

En fait, le rapport de la surface réelle de cette membrane sur sa surface apparente, c'est-à-dire la surface projetée sur un plan horizontal est beaucoup plus élevé que dans le cas de la figure 1, où la membrane électrolytique **106** est purement plane. En effet, en projection sur un plan horizontal, les membranes électrolytiques **106** et **306** présentent la même superficie apparente dans le cas où les deux piles possèdent des dimensions semblables. En revanche, munie de ses reliefs, la membrane électrolytique **306** présente une surface réelle bien supérieure à la superficie de la membrane plane **106.** Le rapport entre surface réelle et surface apparente est ici voisin de 2.

Une telle structure « rugueuse » est rendue possible grâce à l'aptitude du matériau de la présente invention à former un dépôt conforme, c'est-à-dire un dépôt de faible épaisseur reproduisant le relief sous-jacent sur lequel il est déposé. En l'occurrence, la membrane **306** présente une épaisseur de 1 µm, ce qui est bien inférieur aux épaisseurs des membranes de l'art antérieur pour une conductivité protonique analogue.

En effet, l'électrolyte **306** de la pile à combustible illustré par la figure 3 présente une conductivité de plusieurs dizaines de mS/cm.

Ainsi, les performances électriques de la pile illustrée par la figure 3 composée d'un verre organique conducteur protonique conforme sont très sensiblement augmentées. Ces performances électriques sont évaluées en puissance délivrée rapportée à la surface apparente de la membrane.

Par ailleurs, le matériau de l'invention permet également d'augmenter les performances électriques d'une pile à combustible, dans la mesure où il peut être déposé selon une épaisseur réduite. En effet, une telle réduction d'épaisseur permet, pour une même résistivité, de réduire la résistance interne de l'électrolyte conducteur protonique. Or, l'épaisseur de la membrane électrolytique constituée d'un matériau conforme à l'invention peut être contrôlée au micromètre près, ce qui conduit à des épaisseurs de membrane cent fois inférieures aux épaisseurs des membranes de l'art antérieur. Par conséquent, la membrane électrolytique **306** présente une résistance interne bien inférieure, donc une conductivité supérieure à celle que présente la membrane électrolytique **106.**

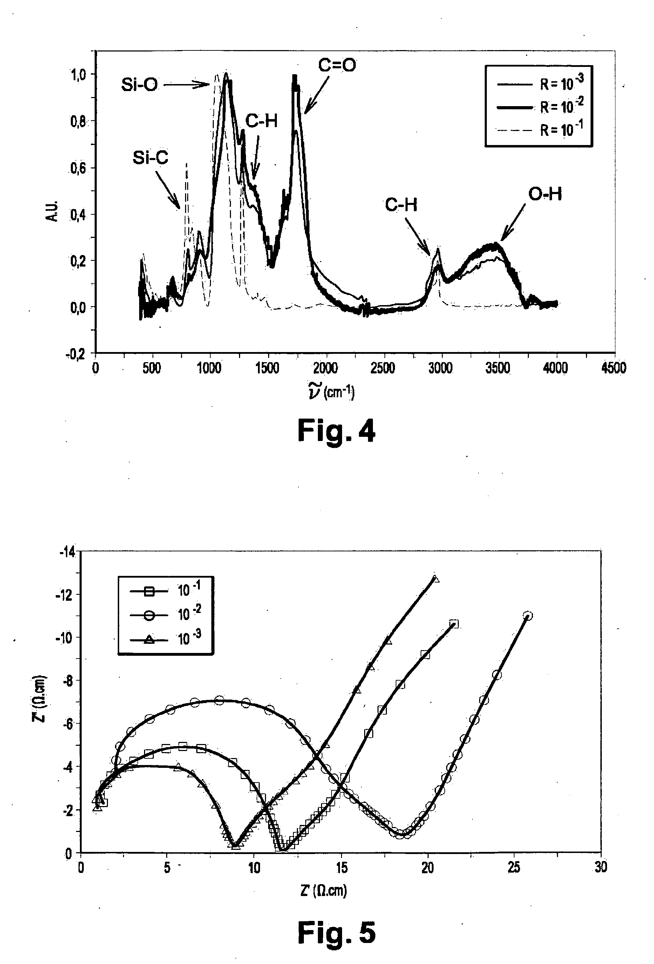

La figure 4 est un diagramme obtenu par spectroscopie infrarouge dans lequel sont mis en évidence les groupements caractéristiques de la matrice du matériau conforme à l'invention. Les courbes de la figure 4 représentent respectivement les rapports R=10⁻¹ , 10⁻² et 10⁻³ entre les atomes de silicium, d'une part, et ceux de carbone et de fluor, d'autre part. Le rapport R vaut donc N_{Si} / (N_{C} + N_{F}), avec N nombre d'atomes.

On observe ainsi que les deux premiers pics pour des nombres d'ondes situés respectivement autour de 750 cm⁻¹ et 1.100 cm⁻¹ correspondent aux ponts composés de silicium, à savoir respectivement -Si-C- et -Si-O-. L'axe des ordonnées est gradué selon une unité arbitraire.

Les spectres infrarouge révèlent également un pic correspondant au nombre d'ondes 1.750 cm⁻¹ indiquant la présence des groupements carboxyliques (COOH) implantés pour fonctionnaliser la matrice du matériau objet de la présente invention.

La figure 5 représente un diagramme sur lequel sont portées la mesure de conductivité obtenue par spectroscopie d'impédance réalisée sur des membranes électrolytiques constituées de matériaux présentant respectivement des rapports atomiques R=10⁻¹ , 10⁻² et 10⁻³. Les conductivités sont respectivement 5 mS/cm, 25mS/cm et 120 mS/cm.

Par ailleurs, des expériences ont permis d'établir la résistance chimique de membranes électrolytiques constituée d'un matériau conforme à l'invention. Ainsi, deux membranes, l'une sans silicium (R=0) et l'autre silicée (R=1) ont été introduites dans un bain d'eau déminéralisée durant 30 min. Après cette immersion, on a constaté que les membranes sans silicium étaient détruites à 90%, tandis que les membranes silicée présentaient une structure inchangée.

L'analyse croisée des mesures de conductivité et de résistance à l'eau met en évidence un rapport R optimum estimé entre 5.10⁻³ et 5.10⁻², permettant d'obtenir une bonne résistance chimique tout en conservant une conductivité correcte (> 25mS/cm).

Cette propriété constitue ainsi un avantage important, puisque de telles membranes silicées sont aptes à résister chimiquement et/ou mécaniquement à l'eau employée dans le procédé de fabrication d'une pile à combustible. En outre, les membranes silicées sont également aptes à résister à d'autres solvants néfastes aux membranes sans silicium.

Pour fabriquer un tel matériau, le procédé consiste à introduire un précurseur gazeux composé de silicium (Si) dans une enceinte de dépôt chimique en phase vapeur assisté par plasma. Concomitamment, on introduit dans cette enceinte de l'octafluorobutène (C₄F₈), de l'hélium (He) et de la vapeur d'eau (H₂O). On pourrait cependant mettre en oeuvre un autre carbofluoré, tel que le C₂F₄, ainsi qu'un autre gaz porteur, tel que l'argon ou l'hydrogène. Les débits de ces gaz sont de l'ordre de quelques centaines de cm³/s. Avec ces gaz, on génère alors un plasma sous faible pression, excité par des décharges capacitives dont la fréquence des ondes radio vaut 13,56 MHz (cette valeur est imposée par les normes de compatibilité électromagnétique). On peut cependant utiliser d'autres types d'excitation plasma, tels que les basses fréquences (de 10 kHz à 400 kHz)), ou les micro ondes (2,45 GHz).

On parvient ainsi à déposer un électrolyte sous forme membranaire conforme au relief du support céramique sous-jacent avec une vitesse de dépôt industrielle d'environ 2µm/h. Connaissant la vitesse de dépôt de l'électrolyte, on peut contrôler de manière précise l'épaisseur totale de la membrane conforme en ajustant la durée de dépôt sous plasma. Cette vitesse pourra être élevée à 5 µm/h en augmentant la densité de puissance du plasma.

Une telle cadence de production permet de produire le matériau de la présente invention selon une cadence industrielle, donc compatible avec les applications envisagées pour les piles à combustible nomades.

Par ailleurs, comme indiqué précédemment, la texturation de la surface du support en céramique poreuse peut être régulière ou irrégulière, voire complètement aléatoire. Quel que soit le relief retenu, le procédé précédemment décrit permet de réaliser un dépôt conforme d'un matériau formant un électrolyte conducteur protonique.

## Revendications

1. Procédé pour la réalisation d'un matériau destiné à constituer un électrolyte (306) pour pile à combustible, ledit matériau présentant une matrice comprenant du carbone, du fluor, de l'oxygène, de l'hydrogène et du silicium, ***caractérisé* en ce qu'**il comprend les étapes consistant :
- à introduire un précurseur gazeux composé de silicium dans une enceinte de dépôt chimique en phase vapeur assisté par plasma ;
- à introduire dans l'enceinte un précurseur carbofluoré ;
- à introduire dans l'enceinte un gaz porteur ;
- à introduire dans l'enceinte de la vapeur d'eau ;
- à générer un plasma dans l'enceinte après introduction de ces différents composés.

2. Procédé selon la revendication 1, ***caractérisé* en ce que** le précurseur carbofluoré est choisi dans le groupe comprenant le C₄F₈ et le C₂F₄.

3. Procédé selon la revendication 1 ou 2, ***caractérisé* en ce que** le précurseur composé de silicium est choisi dans le groupe comprenant les composés organosilicés hémaméthyldisiloxane (HMDSO), le tétraéthyl-orthosilicate (TEOS), l'octaméthylcyclotétrasiloxane (OMCTSO) le tétraméthylsilane (TMS), ainsi que le composé inorganique tétrahydrure de silicium (SiH₄).

4. Procédé selon l'une des revendications 1 à 3, ***caractérisé* en ce que** :
- le débit dudit précurseur gazeux est compris entre 1 cm³/s et 1000 cm³/s ;
- le débit de précurseur carbofluoré est compris entre 1 cm³/s et 1000 cm³/s ;
- le débit du gaz porteur est compris entre 1 cm³/s et 500 cm³/s ;
- le débit de vapeur d'eau est compris entre 1 cm³/s et 1000 cm³/s ;
- l'enceinte est placée sous une pression comprise entre 0,1 mbar et 5 mbar ;
- le plasma est excité par des décharges capacitives, dont la puissance est comprise entre 5 W et 500 W.

5. Matériau destiné à constituer un électrolyte (306) pour pile à combustible susceptible d'être obtenu à l'aide du procédé faisant l'objet de l'une des revendications 1 à 4, ***caractérisé* en ce que** la matériau présente un rapport du pourcentage atomique en silicium sur la somme des pourcentages atomiques en carbone et en fluor compris entre 10⁻³ et 5.10⁻², de préférence entre 5.10⁻³ et 5.10⁻² ou entre 10⁻³ et 10⁻².

6. Matériau selon la revendication 5, ***caractérisé* en ce qu'**il présente une épaisseur comprise entre 1 nm et 10 µm.

7. Pile à combustible ***caractérisée* en ce qu'**elle comporte un empilement comprenant un support (302) poreux à l'hydrogène, un film formant collecteur anodique (303), totalement ou partiellement recouvert par une membrane électrolytique (306) réalisée en un matériau selon la revendication 5 ou 6, ainsi qu'un film formant collecteur cathodique (304).

8. Pile à combustible selon la revendication 7, ***caractérisée* en ce que** le support (302) présente de nombreuses rugosités et **en ce que** la membrane électrolytique (306) est conforme auxdites rugosités.

9. Pile à combustible selon la revendication 8, ***caractérisée* en ce que** le rapport de la surface réelle de la membrane électrolytique (306) sur la surface projetée de la membrane électrolytique (306) sur un plan est supérieur à 2, et préférentiellement supérieur à 5.

## Claims

1. A method for preparing a material for constituting an electrolyte (306) for fuel cell, said material having a matrix comprising carbon, fluorine, oxygen, hydrogen and silicon, **characterized in that** it comprises the steps of:
- introducing a gaseous precursor compound of silicon into a plasma chemical vapor deposition chamber;
- introducing a fluorocarbon precursor into the chamber;
- introducing a carrier gas into the chamber;
- introducing water vapor into the chamber;
- generating a plasma in the chamber after the introduction of these various compounds.

2. The method as claimed in claim 1, **characterized in that** the fluorocarbon precursor is selected from the group comprising C₄F₈ and C₂F₄.

3. The method as claimed in either of claims 1 and 2, **characterized in that** the silicon compound precursor is selected from the group comprising the organosilicate compounds hemamethyldisiloxane (HMDSO), tetraethylorthosilicate (TEOS), octamethylcyclotetrasiloxane (OMCTSO), tetramethylsilane (TMS), and the inorganic compound silicon tetrahydride (SiH₄).

4. The method as claimed in one of claims 1 to 3, **characterized in that**:
■ the flow rate of said gaseous precursor is between 1 cm³/s and 1000 cm³/s;
■ the flow rate of fluorocarbon precursor is between 1 cm³/s and 1000 cm³/s;
■ the carrier gas flow rate is between 1 cm³/s and 500 cm³/s;
■ the water vapor flow rate is between 1 cm³/s and 1000 cm³/s;
■ the chamber is placed under a pressure of between 0.1 mbar and 5 mbar;
■ the plasma is excited by capacitive discharges, whereof the power is between 5 W and 500 W.

5. A material for constituting an electrolyte (306) for fuel cell obtained using the method as claimed in one of claims 1 to 4, **characterized in that** the material has a ratio of the atomic percentage of silicon to the sum of the atomic percentages of carbon and fluorine of between 10⁻³ and 10⁻¹, preferably between 5×10⁻³ and 5×10⁻².

6. The material suitable as claimed in claim 5, **characterized in that** it has a thickness of between 1 nm and 10 µm.

7. A fuel cell **characterized in that** it comprises a stack comprising a substrate (302) porous to hydrogen, a film forming an anode collector (303), totally or partially covered with an electrolytic membrane (306) made from a material as claimed in either of claims 5 and 6, and a film forming a cathode collector (304).

8. The fuel cell as claimed in claim 7, **characterized in that** the substrate (302) has many roughnesses and **in that** the electrolytic membrane (306) matches said roughnesses.

9. The fuel cell as claimed in claim 8, **characterized in that** the ratio of the real area of the electrolytic membrane (306) to the projected area of the electrolytic membrane (306) on a plane is higher than 2, and preferably higher than 5.

## Patentansprüche

1. Verfahren zur Herstellung eines Materials, das dazu bestimmt ist, einen Elektrolyt (306) für eine Brennstoffzelle zu bilden, wobei das Material eine Grundmasse aufweist, die Kohlenstoff, Fluor, Sauerstoff, Wasserstoff und Silicium umfasst, **dadurch gekennzeichnet, dass** es die Schritte umfasst, die darin bestehen:
einen aus Silicium bestehenden gasförmigen Vorläufer in einen Behälter zur durch Plasma unterstützten chemischen Gasphasenabscheidung einzuführen;
- einen Kohlenstoff-Fluor-Vorläufer in den Behälter einzuführen;
- ein Trägergas in den Behälter einzuführen;
- Wasserdampf in den Behälter einzuführen;
- nach dem Einführen dieser verschiedenen Bestandteile ein Plasma in dem Behälter zu erzeugen.

2. Verfahren nach Anspruch 1, **dadurch gekennzeichnet, dass** der Kohlenstoff-Fluor-Vorläufer aus der Gruppe ausgewählt ist, die C₄F₈ und C₂F₄ umfasst.

3. Verfahren nach Anspruch 1 oder 2, **dadurch gekennzeichnet, dass** der aus Silicium bestehende Vorläufer aus der Gruppe ausgewählt ist, die die siliciumhaltigen organischen Verbindungen Hemamethyldisiloxan (HMDSO), Tetraethyl-Orthosilicat (TEOS), Octamethylcyclotetrasiloxan (OMCTSO), Tetramethylsilan (TMS) sowie die anorganische Verbindung Siliciumtetrahydrid (SiH₄) umfasst.

4. Verfahren nach einem der Ansprüche 1 bis 3, **dadurch gekennzeichnet, dass**:
der Durchsatz des gasförmigen Vorläufers zwischen 1 cm³/s und 1000 cm³/s beträgt;
der Durchsatz des Kohlenstoff-Fluor-Vorläufers zwischen 1 cm³/s und 1000 cm³/s beträgt;
der Durchsatz des Trägergases zwischen 1 cm³/s und 500 cm³/s beträgt;
der Durchsatz des Wasserdampfs zwischen 1 cm³/s und 1000 cm³/s beträgt;
der Behälter unter einen Druck zwischen 0,1 mbar und 5 mbar gesetzt wird;
das Plasma durch kapazitive Entladungen angeregt wird, deren Leistung zwischen 5 W und 500 W beträgt.

5. Material, das dazu bestimmt ist, einen Elektrolyt (306) für eine Brennstoffzelle zu bilden und mittels des Verfahren, das den Gegenstand einer der Ansprüche 1 bis 4 bildet, erhalten werden kann, **dadurch gekennzeichnet, dass** das Material ein Verhältnis des Atomprozentanteils an Silicium zur Summe der Atomprozentanteile an Kohlenstoff und Fluor aufweist, das zwischen 10⁻³ und 5.10⁻², vorzugsweise zwischen 5.10⁻³ und 5.10⁻² oder zwischen 10⁻³ und 10⁻² beträgt.

6. Material nach Anspruch 5, **dadurch gekennzeichnet, dass** es eine Dicke aufweist, die zwischen 1 nm und 10 µm beträgt.

7. Brennstoffzelle, **dadurch gekennzeichnet, dass** sie eine Schichtung umfasst, die einen für Wasserstoff porösen Träger (302), eine Schicht, die einen als Anode wirkenden Kollektor (303) bildet und ganz oder teilweise mit einer elektrolytischen Membran (306) bedeckt ist, die aus einem Material nach Anspruch 5 oder 6 hergestellt ist, sowie eine Schicht umfasst, die einen als Kathode wirkenden Kollektor (304) bildet.

8. Brennstoffzelle nach Anspruch 7, **dadurch gekennzeichnet, dass** der Träger (302) zahlreiche Unebenheiten aufweist und die elektrolytische Membran (306) formgleich zu diesen Unebenheiten ist.

9. Brennstoffzelle nach Anspruch 8, **dadurch gekennzeichnet, dass** das Verhältnis der Ist-Oberfläche der elektrolytischen Membran (306) zu der auf eine Ebene projizierten Oberfläche der elektrolytischen Membran (306) mehr als 2 und vorzugsweise mehr als 5 beträgt.
